# EUROPEAN PATENT APPLICATION

(11) **EP 0 654 565 A2**
(43) Date of publication of application: **24.05.1995**
(21) Application number: 94308570.4
(22) Date of filing: 21.11.1994
(51) Int. Cl.: E03D 11/11, F26B 3/00

(54) **Raw sewage disposal apparatus**

(30) Priority: 19.11.1993 JP 314445/93
(71) Applicant: JAPANIC CORPORATION, Ashikaga-shi, Tochigi-ken 326-03 (JP)
(72) Inventor: Kishi, Mitsuhiro, c/o Japanic Corporation, Ashikaga-shi, Tochigi-ken 326-03 (JP)
(74) Representative: Shindler, Nigel

(57) **Abstract**

A raw sewage disposal apparatus capable of easily stirring raw sewage and cleaning a container by rotating the container per se in case of introducing the raw sewage into the container and heating, evaporating and drying the raw sewage. The raw sewage disposal apparatus comprises a container for raw sewage, an induction heater (34) for heating the sewage, a holder (38) for rotatably holding the container, a driver (20) for rotating the container, spherical stirrers (33) accommodated in the container, and a non-rotatable baffle (46, 47, 48) extending into the bottom of the container so as to contact the stirrers (33).

## Description

The present invention relates to a raw sewage disposal apparatus for disposing of raw sewage, which apparatus can be portable to be utilised outside or in a vehicle such as a vessel or train, or in a tunnel or other location inaccessible to a vacuum truck used for collecting raw sewage and, more particularly, relates to such an apparatus capable of performing the stirring of the raw sewage and cleaning, of a drying cauldron by rotating the drying cauldron itself.

Conventionally the raw sewage from human bodies is typically discharged into a sewage system by use of a flush toilet or the like and then flows into a river after being temporarily contained in a holding tank and purified therein. However, at events such as festivals, athletic events, fairs, meetings and the like, temporary toilet facilities must be provided for the disposal of the raw sewage.

Conventionally portable temporary toilets are employed, most of which have a tank for temporarily storing the raw sewage therein. However, the temporary toilets have the problem that the raw sewage contained in the tank must be sucked into a vacuum truck for collection and the collected raw sewage must be transferred to a raw sewage disposal purifying facility, which is laborious and time consuming and is unhygienic.

Vehicles, such as trains, buses, water vessels which operate over long distances are provided with a tank exclusively used for storing and holding the discharged raw sewage. The raw sewage in the tank is subjected to a deodorising treatment by chemicals and is thereafter collected by a vacuum truck at a terminal or relaying point.

As mentioned above, the raw sewage in conventional temporary toilets or movable transportation facilities is contained as it is discharged from the human body and is collected thereafter. Accordingly, the storing method, the collection method and the disposal method are not modern and are very unhygienic. If the temporary toilet has been used for a long period of time, the discharged raw sewage remaining in the tank causes a bad smell.

Operators dislike disposing of the raw sewage which is a disadvantage in regard to maintenance of the temporary toilet.

In an attempt to ameliorate the above problems, there have been proposed several hygienic disposal methods. In one method often employed in vehicles chemicals are introduced into the tank where the raw sewage is contained to prevent the generation of the bad smell and to sterilise the sewage. This method cannot be used for a long period of time because the chemicals become diluted and costs are high.

In another method, the raw sewage is contained in a bag made of vinyl or the like to prevent the diffusion of the bad smell. This method requires a vinyl bag of large size and involves a high cost for disposal thereof, and it is troublesome to separate the raw sewage from the bag. A large-scale disposal facility is also required.

In still another method, the discharged raw sewage is directly dried by use of heat from a burner, etc. Since the primary component of raw sewage is the liquid component, a large amount of heat energy is required to remove the liquid component and it takes a long time to dispose of the raw sewage.

In view of the drawbacks of the conventional methods of disposing of the raw sewage, the present inventor proposed a disposing apparatus having the drying cauldron provided with stirring blades and heat-holding balls therein in which the raw sewage is stirred by the rotation of the stirring blades and heated by heat released by the heat-holding balls whereby the raw sewage is dried in a short period of time and the liquid component which is the primary component of raw sewage is evaporated as disclosed in Japanese patent Nos. 63-124150 and 2-411577, U.S. Patent Nos. 4 999 930, 5 058 213, 5 152 074, 5 230 164 and 5 257 466.

According to the proposed disposal methods, the raw sewage is heated, evaporated in the drying cauldron and diffused into the atmosphere. Before the vapour is diffused, the components which cause the bad smell are treated with a catalyst so that the vapour diffused into the atmosphere is odourless. It was preferable to employ such a method in view of environmental hygiene and preservation even the method is employed in crowded buildings and/or by throngs of people.

It is very hygienic to evaporate and diffuse the raw sewage contained in the airtight drying cauldron and such operations can be carried out systematically, which results in no burden to the operators. It is necessary to stir the raw sewage which is contained in the airtight drying cauldron so as to heat and evaporate the raw sewage uniformly and residual substances which are not evaporated must be removed. There is employed the arrangement of a stirring blade for stirring the residual substances in the drying cauldron and a cleaning mechanism.

In the arrangement for providing the stirring blade, it is necessary to provide a rotary shaft which extends vertically relative to the drying cauldron, which must be accommodated in the height of the apparatus as a whole.

Occasionally non-volatile non-friable objects such as a metallic ball-point pen, a belt or clothing are introduced into the drying cauldron. In such a case, when the raw sewage is stirred, the object enters a gap between the stirring blade and the drying cauldron which jams the stirring blade.

It the rotary shaft and the stirring blade reduce the capacity of the drying cauldron.

To alleviate the disadvantages of the prior art the present invention provides a raw sewage disposal apparatus comprising a heat-resistant container to receive raw sewage, a heating unit provided to heat said container, a holder for holding said container for rotation about vertical axis, a driving means for rotating said container, at least one stirring member in said container, and at least one non-rotatable baffle having a lower end extending into the bottom of said container so as to contact said stirring member.

According to the present invention, the drying cauldron itself can be rotated about a vertical axis. Stirring balls may provide the strirring means inside the drying cauldron. With such an arrangement, when the drying cauldron is rotated, the stirring balls are rotated so that the raw sewage is stirred. An electro-magnetic (inductive) heater unit having a high-frequency coil may provide the heating unit and is preferably disposed under the drying cauldron whereby a high-frequency electromagnetic wave is generated by the heating unit. The electromotive wave transmits to the drying cauldron and the inside of the stirring balls, so that the drying cauldron and the stirring balls per se generate heat by electromagnetic induction heating. As a result, the raw sewage can be heated and stirred so that the liquid component of the raw sewage can be evaporated. Residual substances, such as fibrous substances, which cannot be evaporated from the raw sewage remain inside the drying cauldron when the raw sewage has been dried. The residual substances are sliced off when the stirring balls are rotated in the drying cauldron and then they are reduced to powder. This powder is sucked from the drying cauldron.

By virtue of the invention, the inside structure of the drying cauldron is simplified and rendered immune to jamming.

A raw sewage disposal apparatus constructed in accordance with the present invention will now be described, by way of example only, with reference to the accompanying drawings, in which,
Fig. 1 is a perspective view showing a raw sewage disposal apparatus in a temporary toilet;
Fig. 2 is a perspective view of the disposal apparatus of Fig. 1;

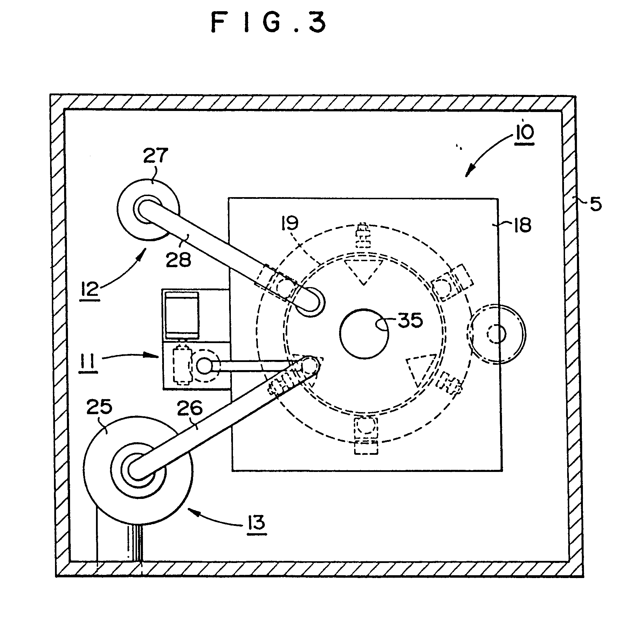

Fig. 3 is a plan view of the raw sewage disposal apparatus of Fig. 1 in which a stool is removed to show the inner structure,

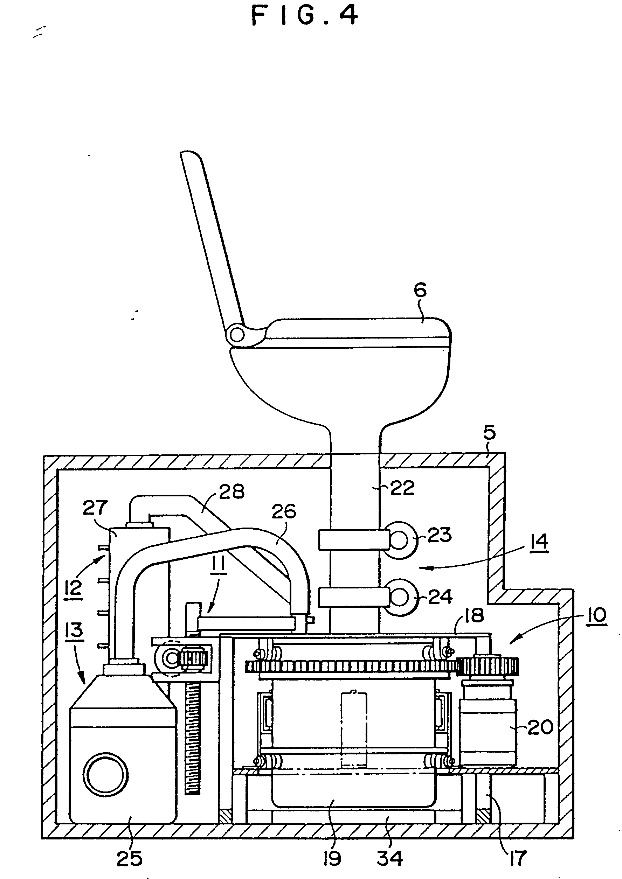

Fig. 4 is a side view of the raw sewage disposal apparatus of Fig. 1;
Fig. 5 is a sectional view from the same side as Fig. 4 with the container sectioned through its axis;
Fig. 6 is a plan view of the raw sewage disposal apparatus of Fig. 1 in which a cover plate is removed;
Fig. 7 is a perspective exploded view of the raw sewage disposal apparatus;
Fig. 8 is a perspective exploded view of the raw sewage disposal apparatus of Fig. 1;
Fig. 9 is a perspective view of a main structure of an insertion operation portion of the raw sewage disposal apparatus of Fig. 1;
Fig. 10 is a schematic view showing a piping system for connecting the components of the raw sewage disposal apparatus.

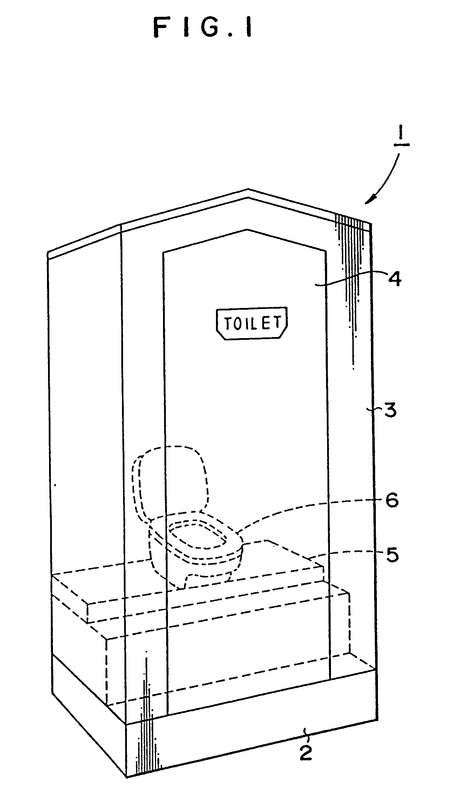

Fig. 1 shows a temporary toilet 1 which comprises a rectangular base 2 which supports a roofed housing 3 comprised of upstanding front, rear and side walls which support the roof. The housing may be made of plastics material, for example, reinforced synthetic resin, or of any other material suitable for the purpose as will be familiar to the person skilled in the art. The housing 3 is provided with a door 4 in the front wall. The door opens forwards of the housing.

Inside the temporary toilet 1 is a raw sewage disposal apparatus 5 which is fixed to an upper portion of the base 2. A western-style stool 6 is fixed to an upper portion of the disposal apparatus 5 and the user using the temporary toilet can utilise the stool 6 for discharging the raw sewage.

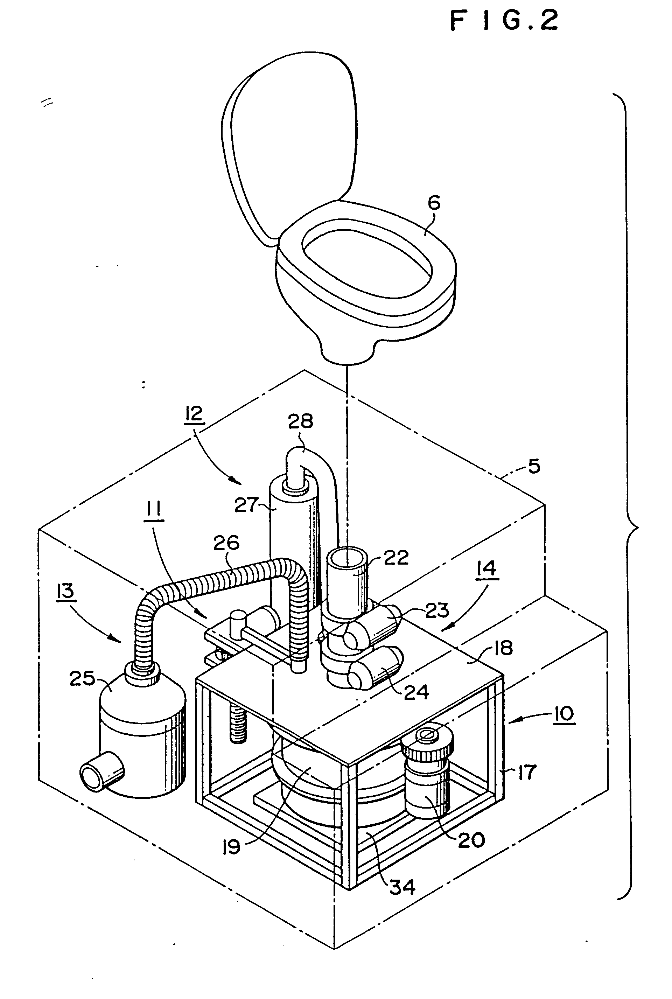

Fig. 2 is a perspective view of the whole raw sewage disposal apparatus. Main components of the raw sewage disposal apparatus 5 are shown by solid lines. The raw sewage disposal apparatus 5 comprises a drying portion 10, an insertion operation portion 11, a deodorising portion 12, a dust collecting portion 13 and a raw sewage introduction portion 14.

The drying portion 10 is provided at a front central portion of the raw sewage disposal apparatus 5. The drying portion includes a holding body 17 which is a frame assembled from square section tubing. The frame forming the holding body 17 is formed of twelve elongate tubes defining the edges of a space bounded by six rectangles. A drying cauldron 19 serving as a container means is rotatably accommodated in the inner central portion of the holding body 17. A motor 20 serving as a driving means or driving the drying cauldron 19 is attached to the holding body 17. A heater unit 34 having a high-frequency coil as an inductive heating means is fixed below the drying cauldron 19. A flat cover plate 18 is fixed to upper tubes of the holding body 17. The upper opening of the drying cauldron 19 is shielded by the cover plate 18.

A hollow introduction pipe 22 is vertically disposed at the centre of the cover plate 18 and the upper open end thereof communicates with the lower surface of the stool 6. Shutters 23 and 24 serving as valve means are attached in two stages to the introduction pipe 22 (at any portion thereof) in a manner whereby they are vertically spaced. When the shutters 23 and 24 are alternately opened and closed, the stool 6 communicates with the drying cauldron 19 through the introduction pipe 22.

An insertion operation portion 11 is disposed at the rear portion of the holding body 17 and a deodorising portion 12 and a dust collecting portion 13 are disposed at the rear right and left sides of the drying portion 10. The deodorising portion 12 removes a bad smell component of the air including vaporised water generated in the drying cauldron 19 when it discharges such air including vaporised water. The deodorising portion 12 comprises a cylindrical reduction catalyst box 27 which has a vertical axis. A discharge pipe 28 connects the upper surface of the coverplate 18 and the upper end of the reduction catalyst box 27 so that the inside of the drying cauldron 19 communicate with the inside of the reduction catalyst box 27. The dust collecting portion 13 sucks out the residual substances which remain inside the drying cauldron 19 after the raw sewage is subjected to the drying process and it can separate the dust from the air, thereby cleaning the residual substances. The dust collecting portion 13 comprises a separation box 25 having an inner structure like a vacuum cleaner. The upper end of the separation box 25 and the insertion operation portion 11 can be flexibly bent and they are connected to each other by a constant volume joint pipe 26. The inside of the drying cauldron 19 can communicate with the inside of he separation box 25 via the joint pipe 26.

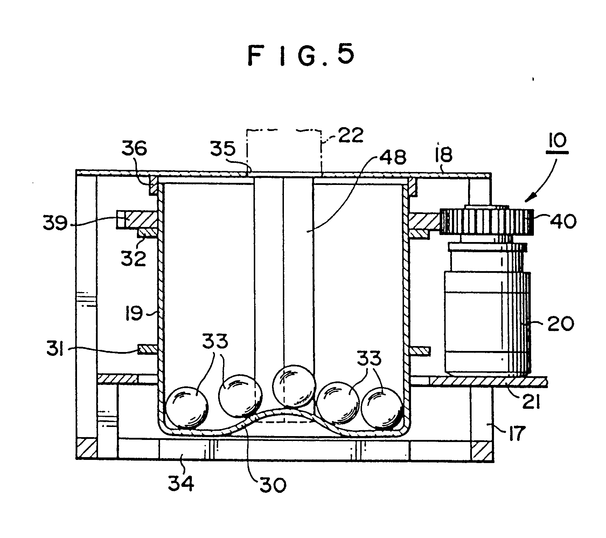

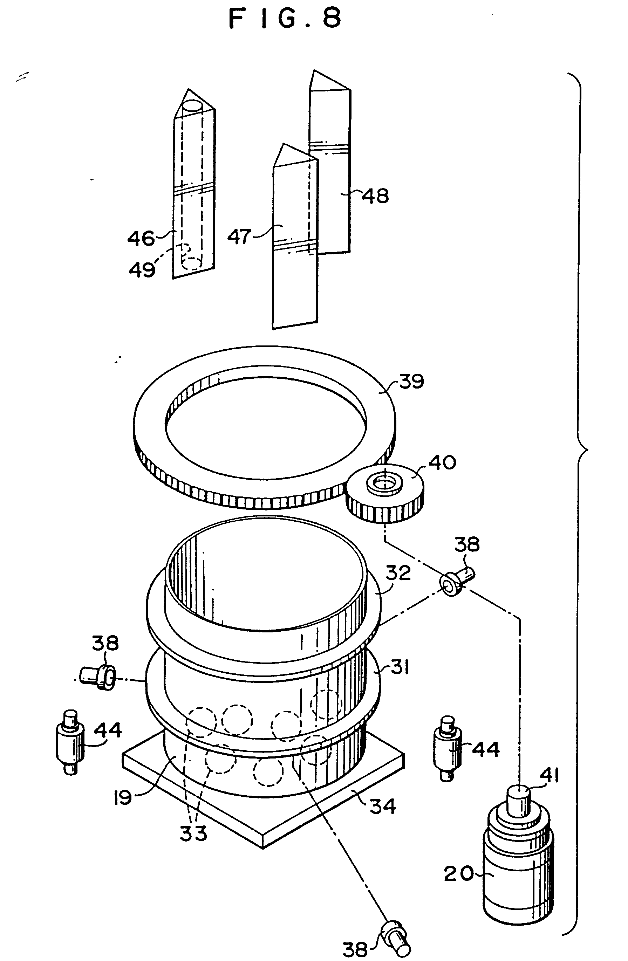

The arrangement of the drying portion 10 will be described in more detail with reference to Figs. 5 to 8.

A flat plate-shaped motor table 21 is fixed horizontally inside the holding body 17 slightly above the lowest portion thereof. A large circular hole is defined through the central portion of the motor table 21, and the drying cauldron 19 is inserted into this hole so as not to contact the motor table 21 even when the drying cauldron 19 is rotated. A bottom portion of a motor 20 is place don the upper surface of the motor table 21.

The drying cauldron 19 is formed of a heat-resistant material for example of a metal such as iron or stainless steel. The drying cauldron 19 has a cylindrical-shape which has a large opening the upper end and a bottom. The side wall of the cauldron is cylindrical and a central portion of the bottom has a central projection 30 which extends upward like a ridge. The central projection is preferably a convex, dome-like intrusion but may be a ridge-like or other shaped projection which provides surfaces which tend to displace bodies placed on it towards the side wall of the cauldron. The upper open end of the drying cauldron 19 is positioned adjacent to the lower surface of the cover plate 18 and is rotatably held thereby. An introduction port 35 is opened at a position of the cover plate 18 corresponding to the central axis of the drying cauldron 19. The lower end of the introduction pipe 22 is connected to the introduction port 35. A ring-shaped seal 36 is fixed under the lower surface of cover plate 18 so that it contacts the outer periphery of the drying cauldron 19 to provide an airtight seal between the cover plate 18 and the interior of the cauldron. A plurality of stirring bodies 33, serve as stirring means, are contained inside the drying cauldron 19. The stirring bodies 33 are preferably spherical and are preferably formed of a material such as cast iron or stainless steel. The stirring bodies may be formed by sintering.

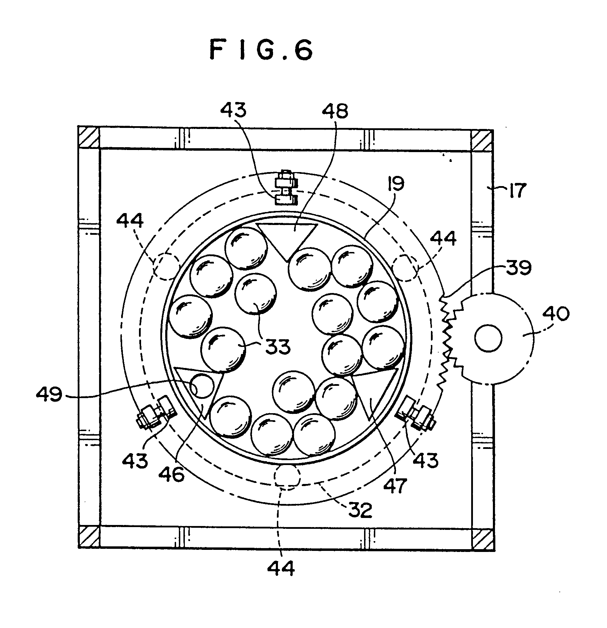

A mechanism for supporting the drying cauldron 19 and a mechanism for rotating the drying cauldron 19 are described hereinafter with reference to Figs. 6 to 8. Two vertically spaced holding rings 31 and 32 are fixed to upper and lower portions respectively of the outer periphery of the drying cauldron 19. Three rotatable supporting rollers 38 contact the lower surface of the holding ring 31 and each supporting roller 38 is positioned horizontally at equal intervals (spaced angularly 120° horizontally) and are supported by the holding body 17. Accordingly, the holding ring 31 is vertically held by the three rotatable supporting rollers 38 whereby the cauldron is rotatably held vertically about its central axis.

Three side rollers 44 contact the side surface of the drying cauldron 19 and each of the side rollers 44 is rotatably supported by the holding body 17 so that the axis of each the side rollers 44 is held vertical. Each of the side rollers 44 is positioned around the drying cauldron 19 at equally spaced intervals (spaced angularly 120° horizontally) and the side rollers 44 are positioned at a central position between the holding rings 31 and 32. Since the side rollers 44, which are rotatably supported by the holding body 17, contact three portions of the outer periphery of the drying cauldron 19, the drying cauldron 19 is constrained to rotate about a fixed central axis.

A large annular gear 39 which has a large central opening and a toothed outer periphery is mounted onto the drying cauldron 19 so that the upper surface of the holding ring 32 is brought into contact with the lower surface of the large gear 39. An inner diameter of the large gear 39 is substantially the same as the outer diameter of the drying cauldron 19 and the large gear 39 non-rotatably engages the upper surface of the holding ring 32. Three stabiliser rollers 43 contact the upper surface of the large gear 39 and each of the rollers 43 is rotatably supported by the holding body 17. Each the rollers 43 is positioned around the drying cauldron 19 at equally spaced intervals (spaced angularly 120° horizontally) and is positioned over one of the supporting rollers 38.

As mentioned above, the drying cauldron 19 is rotatably contacted by the three supporting rollers 38, the stabiliser rollers 43 and the side rollers 44, so that the drying cauldron 19 is always rotatably held by these rollers while the axis thereof is held perpendicular to the top plate.

A small gear 40 which has a tooth surface at the outer periphery meshes with the outer periphery of the large gear 39. Gear 40 is fixed to an output shaft 41 of the motor 20. When the output shaft 41 of the motor 20 is rotated, the small gear 40 and the large gear 39 are driven. The holding ring 32 fixed to the large gear 39 and the drying cauldron 19 are consequently rotated.

Upper ends of three baffle plates 46, 47 and 48 serving as baffle means are fixed to the cover plate 18 to project downwardly inside the drying cauldron 19. The baffle plates 46, 47 and 48 are positioned at equally spaced intervals about the introduction port 35 (spaced angularly 120° apart). Each of the baffle plates 46, 47 and 48 is elongate vertically and triangular in horizontal cross-section. The lengths of the baffle plates 46, 47 and 48 are set so that the lower ends thereof are positioned closely adjacent but slightly spaced form the lower surface of the drying cauldron 19. The baffle plates 46, 47 and 48 thus hang down into the drying cauldron 19. A cleaning hole 49, extends vertically through the baffle plate 46 and a hollow cleaning pipe 51 is inserted into the cleaning hole 49.

A discharge port 50 is formed through the cover plate 18 at a position close to the introduction port 35, the port 50 being between the baffle plates 46 and 48.

A heater unit 34 having a high-frequency coil for generating a high-frequency electromagnetic wave is disposed horizontally under the drying cauldron 19. The heater unit is slightly spaced from the lower surface of the drying cauldron 19.

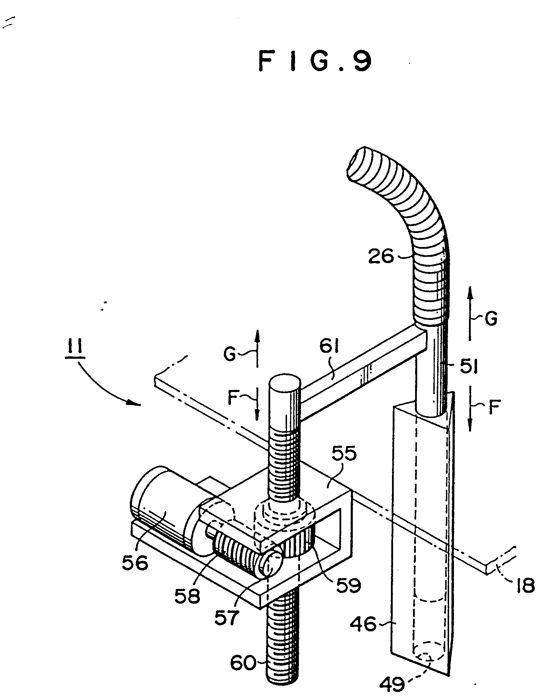

The arrangement of the insertion operation portion 11, which is provided adjacent the drying portion 10, will now be described with reference to Fig. 9. An angle body 55 which has a portion U-shaped in cross-section and fixed to the side surface of the cover plate 18. The U-shaped portion has an opening which is directed to the outside. An elevating motor 56 is fixed to the angle body 55 in the U-shaped portion so that its axis is held horizontally. A worm 58 is fixed to a rotatable output shaft 57 of the elevating motor 56 and meshes with a worm gear 59 which is inserted into the space of the U-shaped portion. The angle body 55 has aligned upper and lower openings, and a long screw rod 60 is vertically inserted into the openings of the angle body 55 in which a male screw formed at the periphery of the screw rod 60 is screwed into female screw formed inside the worm gear 59.

A connecting rod 61 is fixed to the upper end of the screw rod 60 and it extends horizontally toward the centre of the cover plate 18, and the tip end of the connecting rod 61 is fixed to the upper end of the cleaning pipe 51. With such an arrangement, when the output shaft 57 of the elevating motor 56 is rotated, the worm 58 is driven and rotated so that the worm gear 59 meshing with the worm 58 is rotated. When the worm gear 59 is rotated, the female screw formed at the centre of the worm gear 59 slides around the male screw formed on the periphery of the screw rod 60 so that the screw rod 60 is moved vertically. When the screw rod 60 is moved vertically, the connecting rod 61 and the cleaning pipe 51 are moved vertically so that the cleaning pipe 51 slides vertically inside the cleaning hole 49 of the baffle plate 46.

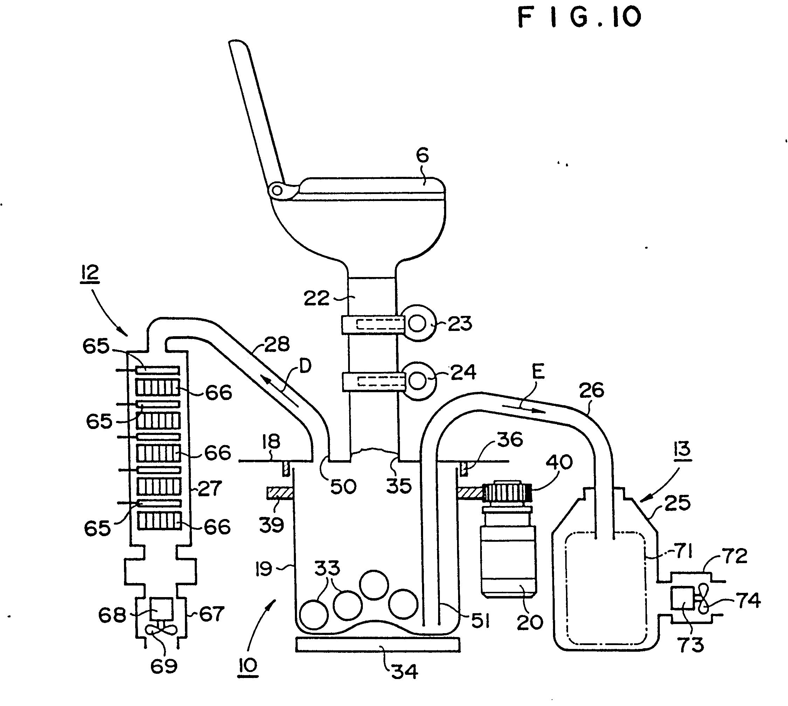

The connection of each component of the raw sewage disposal apparatus 5 is explained with reference to Fig. 10.

The drying cauldron 19 is drum shaped having the opening at the upper end and the bottom wall at the lower end. The cover plate 18 is provided horizontally at a portion close to the opening of the drying cauldron 19 and the ring-shaped seal 36 is provided so as to lightly contact the outer periphery of the upper end of the drying cauldron 19. There is formed a space within the drying cauldron 19, cover plate 18 and seal 36 which is made airtight from the outside. The lower end of the introduction pipe 22 communicates with the cover plate 18 and the upper end of the introduction pipe 22 is connected to the lower end opening of the stool 6. The shutters 23 and 24 are provided at any portion on the introduction pipe 22. Accordingly, the raw sewage discharged toward the stool 6 passes through the introduction pipe 22, shutters 23 and 24 and then drops inside the drying cauldron 19 through the introduction port 35.

One end of the air discharge pipe 28 is connected to the discharge port 50 which is defined through the cover plate 18 and the other end of the discharge pipe 28 is connected to the upper end of the deodorising portion 12. The reduction catalyst box 27 is cylindrical in outer shape, upright and hollow. A heater 65 and a catalyst 66 are alternately disposed in the reduction catalyst box 27 so as to be vertically layered. The heater 65 generates heat by receiving the power supply and reheats the discharged air. The catalyst 66 includes precious metal such as platinum, palladium, etc. and has a honeycomb structure so as to enable the air to flow therethrough. In the reduction catalyst box 27, the heater 65 heats the air including bad smell component which is generated inside the drying cauldron 19 and the catalyst 66 passes the air therethrough, thereby subjecting the air including such bad smell component to oxide and reduction process before such air is diffused outside. An air blower 67 is connected to the lower end opening of the reduction catalyst box 27. A motor 68 and a fan 69 driven by the motor 68 are respectively accommodated in the air blower 67.

The separation box 25 constituting the dust collecting portion 13 has a structure like a vacuum cleaner. The separation box 25 has openings at the upper end and side surfaces thereof and is of bottle shape and is hollow inside thereof. The separation box 25 has inside thereof a dust collecting bag 71 which is formed of a permeable material such as cloth or paper, and capable of catching the dust inside of the separation box 25. The remote end of the joint pipe 26 extends through the upper opening of the separation box 25 to the inside of the separation box 25 and is connected to the dust collecting bag 71. An air blower 72 is connected to the opening at the side surface of the separation box 25 and a motor 73 and a fan 74 driven by the motor 73 are respectively accommodated inside the air blower 72.

The operation of the present embodiment will now be briefly described.

The raw sewage disposal apparatus 5 must be in a standby state before starting its operation. In this case, the shutters 23 and 24 are closed, the screw rod 60 is moved upwardly by the elevating motor 56 in the direction of arrow G (Fig. 9), the cleaning pipe 51 is thus moved in the direction of the arrow G so that the cleaning pipe 51 is pulled out from the cleaning hole 49. A high-frequency power supply is not yet supplied to the heater unit 34 and the power supply is not yet supplied to the heater 65. The motors 20, 68 and 73 are also not energised.

When using the temporary toilet 1, the user opens the door 4 and enters the housing 3 and discharges raw sewage toward the stool 6. The discharged raw sewage is stored in a lower portion of the stool 6 and is temporarily stored above the closed shutter 23.

When the user presses a button (not shown) representing the completion of the use of the apparatus, the shutter 23 is opened so as to drop the raw sewage through the introduction pipe 22 and the raw sewage is temporarily stored above the closed lower stage shutter 24. If the shutter 23 is opened for a given time, it is closed and the shutter 24 is opened so as to introduce the raw sewage which was stored on the lower stage shutter 24 into the inside of the drying cauldron 19 through the introduction pipe 22. Successively, the lower stage shutter 24 is closed after a given time elapses and thus the introduction pipe 22 is closed.

When the raw sewage is introduced into the drying cauldron 19, the raw sewage must be dried and evaporated. The drying and evaporation process is automatically performed when the user presses the button, not shown.

High-frequency power is applied to the heater unit 34 by a power supply unit, not shown, so as to generate a high-frequency electromagnetic wave from the high-frequency coil accommodated in the heater unit 34 so that an electromagnetic wave is transmitted to the inside and outside of the drying cauldron 19. When the high-frequency electromagnetic wave is transmitted to the inside and outside of the drying cauldron 19, the metallic drying cauldron 19 gets hot due to eddy current loss and at the same time the metallic stirring bodies (i.e. balls) 33 accommodated inside the drying cauldron 19 are heated. The heat generated by the drying cauldron 19 and stirring bodies 33 is transmitted to the raw sewage, thereby heating the raw sewage.

The power supply unit also starts to supply power to the motor 20, heater 65 and motor 68, thereby driving the motors 20 and 68 and heating the heater 65.

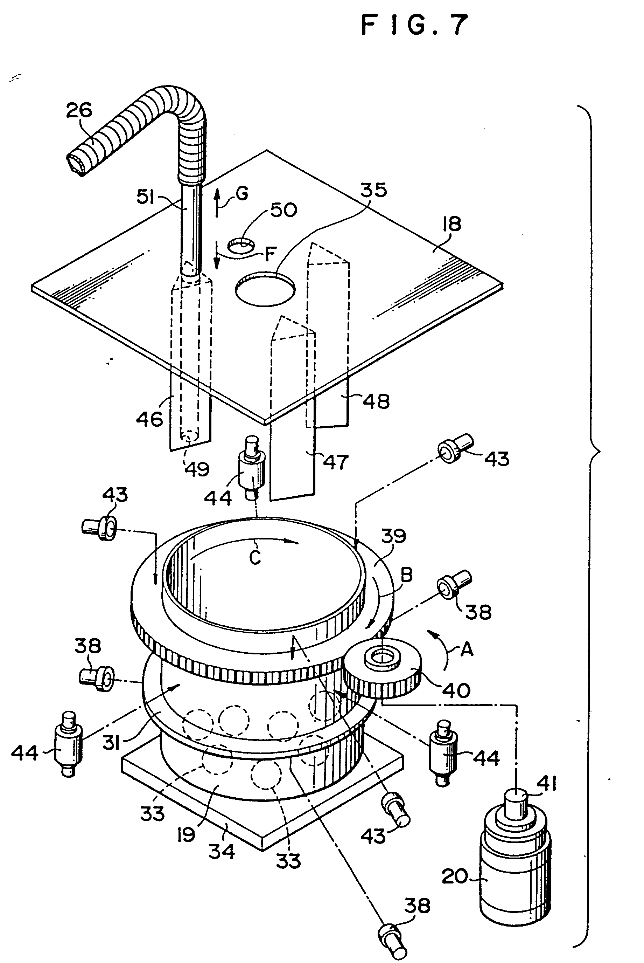

When the motor 20 is driven, the output shaft 41 is rotated by the driving force of the motor 20 so that the small gear 40 coupled to the output shaft 41 is rotated in the direction of arrow A (Fig. 7). The large gear 39 meshing with the small gear 40 starts to rotate in the direction of arrow B which is opposite to the direction of arrow A and the drying cauldron 19 coupled to the large gear 39 starts to rotate in the direction of arrow C (Fig. 7). The large gear 39 is placed on the holding ring 32 which is fixed to the outer periphery of the drying cauldron 19 like a band and the rollers 43 contact the upper surface of the large gear 39 at three portions thereof so that the large gear 39 is rotated while rotating the rollers 43. Since the rollers 43 are supported by the holding body 17, they restrict upward movement of the drying cauldron 19 even if the drying cauldron 19 is rotated.

As mentioned above, although the drying cauldron 19 is rotated by the motor 20 in the direction of the arrow C, the stirring bodies 33 and the raw sewage respectively accommodated inside the drying cauldron 19 are also rotated at the same time at the bottom of the drying cauldron 19 when the drying cauldron 19 is rotated. At this time, the baffle plates 46, 47 and 48 are uniformly angularly disposed at three positions close to the bottom of the drying cauldron 19 as shown in Fig. 6, and these baffle plates 46, 47 and 48 are fixed to the non-rotatable cover plate 18. Accordingly, the stirring bodies 33 which are urged to rotate when the drying cauldron 19 rotates, contact the baffle plates 46, 47 and 48 so that the rotation of the stirring bodies 33 is prevented by the baffle plates 46, 47 and 48. As a result, the stirring bodies 33 are pushed inwardly toward the centre of the drying cauldron 19. However, since the shape of the bottom of the drying cauldron 19 is convex by virtue of the projection 30 the stirring bodies 33 pass around the baffle plates 46, 47 and 48 and are returned toward the side wall of the drying cauldron 19 by the inclination of the central projection 30. Thus, the stirring bodies 33 reciprocate between the centre side wall of the drying cauldron 19 while they are rotated and thus they repeatedly create a wavelike motion pattern. As a result, the raw sewage stored inside the drying cauldron 19 is stirred by the stirring bodies 33.

In such a manner, the heat of the drying cauldron 19 and the stirring bodies 33 which are heated by the heater unit 34 is transmitted to the raw sewage, thereby increasing the temperature of the raw sewage. At the same time, the raw sewage is stirred when the drying cauldron 19 is rotated so that the temperature of the raw sewage is uniformly increased as a whole. Also, since the raw sewage contacts all the surface of the stirring bodies 33, the transfer of the heat generated by the stirring bodies 33 having large surface areas is facilitated, thereby facilitating the increase of the temperature of the raw sewage. When the temperature of the raw sewage in the drying cauldron 19 is increased, it exceeds the boiling point so that the liquid component which is a primary component (the largest part) of the raw sewage is vaporised. The vapour is permitted to flow in the direction of arrow D (Fig. 10) through the discharge port 50 and the discharge pipe 28 into the reduction catalyst box 27.

When the motor 68 of the air blower 67 operates, the fan 69 fixed to the output shaft of the motor 68 is rotated so that the fan 69 sucks the air inside the reduction catalyst box 27 and discharges such sucked air toward the outside so that the inside of the reduction catalyst box 27 is under negative pressure. Accordingly, the vapour flows through the reduction catalyst box 27 so that the air including the vapour is passed through the air blower 67 and diffused outside.

The air including the vapour which is discharged form the drying cauldron 19 also contains odious components such as urea and ammonia. Accordingly, it is necessary to change the odious component into an odourless component before it is diffused outside.

The air including vapour enters the reduction catalyst box 27 and contacts the heater 65 and is increased in temperature. At the same time, the heat from the heater 65 heats the catalyst 66 so as to maintain a sufficient temperature by which the catalyst 66 performs its function. When the air including the vapour passes through the catalyst 66, the odious component included in the vapour is subject to oxidation-reduction and is changed so as to be odourless. Since a plurality of heaters 65 and catalysts 66 are layered vertically inside the reduction catalyst box 27, the urea, ammonia, etc. which are the odious components can be subject to oxidation-reduction with confidence. As a result, the air and vapour which is discharged from the temporary toilet 1 is odourless.

If the heating of the drying cauldron 19 and the stirring bodies 33 continues for a given (sufficient) time, the raw sewage in the drying cauldron 19 is finally dried and the fibrous substance or ash included in the raw sewage which is not evaporated remains in the drying cauldron 19. The evaporation process is completed at this stage.

When the evaporation process is completed, the residual substances remain inside the drying cauldron 19. If the residual substances remain as they are, they accumulate inside the drying cauldron 19, which prevents the raw sewage disposal apparatus 5 from being used for extended periods of time. Accordingly, if one or more evaporation processes are to be performed the inside of the drying cauldron 19 must be subjected to a cleaning process, thereby preventing the residual substances from accumulating in the drying cauldron 19. In the cleaning process, the motor 20 continues to operate so as to continuously rotate the drying cauldron 19 in a given direction by way of the small gear 40 and large gear 39. However, the motor 68 stops its operation so as to stop the flow of air through discharge port 50, discharge pipe 28 and reduction catalyst box 27. At the same time, the power supply to the heater 65 is stopped, thereby stopping the heating of the catalyst 66.

When the cleaning process starts, the elevating motor 56 is first operated so as to rotate the output shaft 57 and worm 58. As a result, the worm gear 59 meshing with the worm 58 is rotated so as to lower the screw rod 60, which is screwed into the worm gear 59 in the direction of arrow F in Fig. 9. Accordingly, the connecting rod 61 and the cleaning pipe 51 respectively fixed to the upper end of the screw rod 60 are likewise lowered in the direction of the arrow F so that the cleaning pipe 51 lowers inside the cleaning hole 49. Since the cleaning pipe 51 slides inside the cleaning hole 49 which is opened longitudinally in the baffle plate 46 when the cleaning pipe 51 lowers, the dust stuck to the inner wall of the cleaning hole 49 is sliced off at the tip end of the cleaning pipe 51. As a result, the lower end of the cleaning pipe 51 is forced to move downwardly toward a position adjacent to the lower end opening of the cleaning hole 49. When the cleaning pipe 51 is moved to is lowest position, the operation of the elevating motor 56 stops.

The operation of the motor 73 starts at the same time as the cleaning pipe 51 is lowered by the elevating motor 56. When the motor 73 starts operation, the fan 74 coupled to the motor 73 is rotated so as to discharge the air in the separation box 25 toward the outside through the air blower 72. Accordingly, the separation box 25 is under negative pressure so that the air in the drying cauldron 19 flows through the inside of the cleaning pipe 51, through the joint pipe 26 and, in the direction of arrow E in Fig. 10 so that it enters the dust collecting bag 71 of the separation box 25. Thus, the residual substances are collected in the air permeable dust collecting bag 71. The air from which the dust is removed is passed through the dust collecting bag 71 and discharged outside by the air blower 72.

The motor 20 continues to operate even when the suction and separation of the residual substances are performed and rotates the drying cauldron 19 in the direction of arrow C in Fig. 7. Accordingly, the stirring bodies 33 are rotated at the bottom portion of the drying cauldron 19 and they perform a friction motion at the bottom surface and inner side wall of the drying cauldron 19 when they rotate. Accordingly, the residual substances stuck to the bottom surface and inner side wall of the drying cauldron 19 are sliced off by the friction motion of the stirring bodies 33 a further they are crushed to small particles by the rotation o the stirring bodes 33 so that the are deformed and broken in shape so at to be movable by the flow of the air. In such a manner, the residual substances which are stuck to the bottom of the drying cauldron 19 and the surface of the stirring bodies 33, and which are not evaporated, are changed into fine dust so that they are moved together with the air through the cleaning pipe 51 and joint pipe 26 and are moved into the dust collecting bag 71 and are finally caught by the dust collecting bag 71. All the residual substances in the drying cauldron 19 are displaced outside by the operation of the motors 20 and 73 for a given (sufficient) time, thereby completing the cleaning process of the drying cauldron 19.

When the cleaning of the inside of the drying cauldron 19 is completed, the raw sewage disposal apparatus 5 must be placed in standby for the next drying process. Accordingly, the raw sewage disposal apparatus 5 must be returned to its original state.

Accordingly, the operation of the motors 20 and 73 are first stopped. When the motor 20 stops, the drying cauldron 19 stops its rotation. When the motor 73 stops, the fan 74 stops its rotation so as to stop the suction of the air by the air blower 72. Accordingly, the flow of air through the cleaning pipe 51 and joint pipe 26 in the direction of the arrow E stops. When the elevating motor 56 is operated in the opposite direction so as to reverse the rotation of the output shaft 57 and worm 58, the worm gear 59 is reversely rotated so as to lift the screw rod 60 which is screwed into the worm gear 59 in the direction the arrow G in Fig. 9. When the screw rod 60 is lifted in the direction of the arrow G, the cleaning pipe 51 moves upwardly inside the cleaning hole 49 and the lower end of the cleaning pipe 51 is pulled out until it reaches the upper potion of the cleaning hole 49. This is the standby state.

With the repetition of the standby state, use of the temporary toilet, starting of the drying process, cleaning process of the dust, and restoring the mechanism, the raw sewage discharged toward the stool 6 can be cyclically evaporated and dried so that the vapour can be deodorised before diffusion outside and the residual material which remains inside the drying cauldron 19 can be comuted and removed. The toilet can be used indefinitely until switched of.

The stirring bodies 33 according to the present embodiment are preferably formed of conductive materials which are preferably metallic and generate heat by the electromagnetic wave. However, the materials of the stirring bodies 33 may be formed of ceramics or sintered materials such as china and porcelain. In this case, the stirring bodies 33 per se do not generate heat by the electromagnetic wave but they perform the stirring of the raw sewage and the slicing of the residual substances and the powdering of the residual substance when the stirring bodies 33 rotate.

With the aforementioned arrangement of the present invention, it is not necessary to provide a rotatable blade and shaft inside the drying cauldron, thereby increasing he usable inner space of the drying cauldron. Further, since the raw sewage can be stirred and the stirring bodies can be rotated when the drying cauldron per se is rotated, the use of a separate stirring blade can be dispensed with. The apparatus is immune to jamming caused by non-volatile, non-friable articles such as a ball point pen being introduced into the cauldron.

The residual substances which remain inside the drying cauldron after the evaporation of the raw sewage can be sliced off by the stirring bodies and at the same time they are powdered, and hence the automatic cleaning process can be performed by sucking the powdered dust. Accordingly, the dusts which remain after the completion of the evaporation is not accumulated in the drying cauldron so that the drying cauldron can always be maintained at its initial state. As a result, the drying cauldron can be continuously used for a long time without maintenance.

## Claims

1. A raw sewage disposal apparatus comprising:
a heat-resistant container to receive raw sewage;
a heating unit (34) provided to heat said container;
a holder (31, 32, 38, 43, 44) for holding said container (19) for rotation about vertical axis;
a driving means (20) for rotating said container (19);
at least one stirring member (33) in said container; and
at least one non-rotatable baffle (46, 47, 48) having a lower end extending into the bottom of said container so as to contact said stirring member (33).

2. A raw sewage disposal apparatus according to claim 1, including:
a stool (6) for collecting the raw sewage; and
an introduction pipe (22) communicating with said stool (6) and said container for introducing the raw sewage from said stool (6) to said container means (19).

3. A raw sewage disposal apparatus according to claim 1 or claim 2, including a deodorising unit (12) communicating with an inner space of said container for introducing air into said container (19) so as to expel vapour and gases from said container.

4. A raw sewage disposal apparatus according to any one of claims 1-3, including a dust collecting unit (13) for sucking air through said container to remove non-volatile residue from said container.

5. A raw sewage disposal apparatus according to any one of the preceding claims, wherein said container comprises a drying cauldron (19) which is held for rotation about a vertical axis and has an open upper end and a closed bottom, and a cover plate (18) which is provided adjacent to the upper open end of said drying cauldron (19) and is fixed not to rotate.

6. A raw sewage disposal apparatus according to claim 5, wherein a seal (38) is fixed to the lower surface of said cover plate (18) to engage between the cover plate (18) and the cauldron (19) to provide an airtight seal.

7. A raw sewage disposal apparatus according to claim 5 or claim 6, wherein said drying cauldron (19) has an upwardly projecting portion (30) in its bottom which tends to displace each stirring member towards the side wall of the cauldron (19).

8. A raw sewage disposal apparatus according to any one of claims 5-7, wherein said baffle (46, 47, 48) is rod-shaped, extends toward the bottom of said drying cauldron (19) and is positioned close to the inner side wall of said drying cauldron (19), and wherein said baffle (46, 47, 48) has an upper end fixed to the lower surface of said cover plate (18).

9. A raw sewage disposal apparatus according to any one of claims 2-8, including a valve provided on said introduction pipe (22) for permitting or not permitting said stool (6) to communicate with said drying cauldron (19).

10. A raw sewage disposal apparatus according to any one of claims 3-9, wherein said deodorising unit (12) comprises an airtight reduction catalyst box (27), a heater (65) and a catalyst (66) respectively contained in the reduction catalyst box (27), an air blower (67) for discharging the air in said reduction catalyst box (27) to the atmosphere, and a discharge pipe (28) for permitting said container to communicate with said reduction catalyst box (27).

11. A raw sewage disposal apparatus according to any one of claims 4-10, wherein said dust collecting unit (13) comprises an airtight separation box (25), a dust collecting bag (71) contained in said separation box (25) for separating dust from the air and collecting the separated dust therein, an air blower (72) for discharging the air in the separation box (25) to the atmosphere, and a joint pipe (26) for permitting the container to communicate with said separation box (25).

12. A raw sewage disposal apparatus according to any one of the preceding claims, wherein said baffle (46, 47, 48) has a cleaning hole (49) which extends vertically through it, and a cleaning pipe (51) which slides vertically in said cleaning hole (49), and wherein said cleaning pipe (51) is connected to an insertion operation portion (11) for lowering said cleaning pipe (51) when cleaning the dust inside of said container (19), and wherein a joint pipe (26) is connected to a separation box (25) and to an upper end of said cleaning pipe (51).
